# EUROPÄISCHE PATENTSCHRIFT

(11) **EP 2 368 733 B1**
(45) Veröffentlichungstag und Bekanntmachung des Hinweises auf die Patenterteilung: **09.04.2014**
(21) Anmeldenummer: 11001121.0
(22) Anmeldetag: 11.02.2011
(51) Int. Cl.: B60H 3/06, B01D 46/00, B61D 27/00, B61C 17/04, B61C 5/02

(54) **Vorrichtung zur automatischen Reinigung von Luftfiltern**
Device for automatically cleaning air filters
Dispositif de nettoyage automatique de filtres à air

(30) Priorität: 10.03.2010 DE 102010010867
(43) Veröffentlichungstag der Anmeldung: 28.09.2011
(73) Patentinhaber: DB Schenker Rail Deutschland AG, 55116 Mainz (DE)
(72) Erfinder: Kunz, Michael, 83233 Bernau (DE); Kreusch, Hans-Gerd, 47929 Grefrath (DE); Klockow, Thomas, 81673 München (DE)
(74) Vertreter: Zinken-Sommer, Rainer

(56) Entgegenhaltungen:
- DE-A1- 3 341 786
- GB-A- 343 085
- US-A1- 2005 166 559
- US-A1- 2008 110 141

## Beschreibung

Die Erfindung betrifft eine Vorrichtung zur automatischen Reinigung mindestens eines Filters in einer Luftfilterungsanlage eines Fahrzeugs.

Bei Fahrzeugen werden an verschiedenen Stellen Luftfilter eingesetzt, um zumeist feste Partikel aus der äußeren Umgebungsluft aus dem weiter zu verwendenden Luftstrom herauszufiltern. Dies ist z.B. erforderlich bei der Reinigung der Ansaugluft für Verbrennungsmotoren, der Belüftungsvorrichtung einer Klimaanlage oder bei Wärmetauschern, die Umgebungsluft ansaugen, um damit ein Kühlmedium zu kühlen.

Insbesondere bei hohem Luftdurchsatz und hohen Laufleistungen kommt es relativ schnell dazu, dass die Luftfilter von dem angesammelten Grobschmutz, Laub, Pollen, etc. wieder gereinigt werden müssen. Der hierfür erforderliche Wartungsaufwand kann jahreszeitabhängig recht hoch sein.

Beim Betrieb ohne Luftfilter setzt sich das Filternetz des Wärmetauschers ebenfalls schnell zu. Dieses ist allerdings nur unter erheblichem Aufwand und der Gefahr der Beschädigung der Kühlerlamellen zu reinigen.

So sind beispielweise in Fahrzeugen der DB AG Luftfilter an Trafo- und Stromrichterkühlanlagen eingesetzt. Die kühle Frischluft wird dabei mithilfe von Ventilatoren durch die Öffnungen an der Fahrzeugaußenhülle aktiv angesaugt, trifft auf ein feinmaschiges Metallgitter, das als Luftfilter dient und anschließend auf einen großflächigen Wärmetauscher, der die von den Transformatoren bzw. Stromrichtern erzeugte Wärme an die Luft abgibt.

Für eine effektive Kühlleistung ist ein entsprechend hoher Luftdurchsatz auf den Wärmetauscher erforderlich, der nur dann gewährleistet ist, wenn der vor dem Wärmetauscher im Luftstrom befindliche Luftfilter nicht zu stark verschmutzt ist.

Die Erfahrung hat gezeigt, dass frische Verschmutzungen, z.B. durch Laub, Pollen, etc. auch in feuchtem Zustand von den Filtern entfernt werden können, wenn die Filter per Hand mithilfe eines Besens oder mithilfe eines Staubsaugers gereinigt werden. Hierfür muss aber das Fahrzeug zunächst in eine Wartungseinrichtung gebracht werden. Da die Filter aufgrund des hohen Luftdurchsatzes und der hohen Laufleistung der DB-Fahrzeuge oft schon innerhalb weniger Tage einen hohen Verschmutzungsgrad aufweisen, stellt sich die Anforderung, rung, die Filterreinigung möglichst unabhängig von zusätzlichem Personal, automatisiert zu realisieren.

Die DE 296 23 613 U1 beschreibt eine Reinigungsvorrichtung für Filter und Filtermatten, die eine halbautomatische Reinigung von zylinderförmigen und flachen Gas- oder Flüssigkeitsfiltern und Filtermatten ermöglicht. In einer Reinigungskammer ist hierfür eine drehbare Grundplatte vorgesehen, auf der das zu reinigende Filter befestigt werden kann. Entlang der Filterinnenseite ist eine verfahrbare innere Reinigungsdüse und entlang der Filteraußenseite eine verfahrbare äußere Reinigungsdüse vorgesehen. Der Reinigungsvorgang erfolgt mittels zweier mit Druckluft beaufschlagter Vielstrahl-Reinigungsdüsen. Eine der Düsen ist im Innenteil des Filters höhenverfahrbar, die zweite Düse ist auβen am Filter ebenfalls höhenverfahrbar montiert.
Durch diese Vorrichtung ist zwar eine automatisierte Reinigung der Filter möglich, aber die Filter müssen zur Reinigung ausgebaut und in die Reinigungskammer eingesetzt werden. Hierfür ist es weiterhin erforderlich, das Fahrzeug, in welches die zu reinigenden Filter eingebaut sind, in eine Wartungseinrichtung zu bringen.

Aus der DE 37 06 220 C2 ist eine Belüftungsvorrichtung für Kraftfahrzeuge bekannt, bei der ein in einem Fahrzeug eingebauter Luftfilter automatisch gereinigt werden kann. Hierfür wird der Filter in eine Ausschwenkstellung gebracht, wenn die dem Kraftfahrzeuginnenraum zugeführte Luft keiner Reinigung bedarf. Dies kann manuell ausgelöst werden oder vollautomatisch, wenn der Filter in bestimmten Betriebszuständen ohnehin aus dem Gebläseluftstrom ausgeschwenkt wird. In dem ausgeschwenkten Zustand wird der Filter gereinigt, indem durch diesen in Gegenrichtung strömende Teilluft gelenkt wird.
Der Nachteil dieser Vorrichtung liegt darin, dass der Filter zur Reinigung erst noch in eine Ausschwenkstellung gebracht werden muss, wozu es erforderlich ist, dass der Filter beweglich ist.

Die US 2005/0166559 A1 beschreibt als nächster Stand der Technik einen mehrstufigen Luftfilter, inklusive eines gepulsten Reinigungssystems. Hierbei werden Luftfilterplatten in einer V-Stellung angeordnet und mithilfe von Druckluft, die von oben auf die V-Anordnung geblasen wird, gereinigt. Hier wirkt sich nachteilig aus, dass je Filterplatte nur eine große Anblasdüse verwendet wird. Zum Verteilen der Luft auf die Filter sind Splitter mit Leitelementen erforderlich, die den Luftstrom ablenken. Trotzdem kann mit dieser Anordnung keine gleichmäßige und schonende Reinigung des Filters erfolgen, da je nach Entfernung des angeblasenen Filterabschnitts von der Anblasdüse ganz unterschiedliche Drücke herrschen.

Aufgabe der vorliegenden Erfindung ist es, eine Vorrichtung zur Reinigung von Luftfiltern bereitzustellen, die es gestattet, die Filter in ihrer fixen Position, ohne eine Wartungseinrichtung aufsuchen zu müssen, automatisch und effektiv zu reinigen und dabei die Nachteile des Stands der Technik zu überwinden.

Diese Aufgabe wird durch die erfindungsgemäße Vorrichtung gemäß Patenanspruch 1 gelöst.

Vorteilhafte Weiterbildungen sind Gegenstände der abhängigen Ansprüche.

Gemäß Anspruch 1 befindet sich auf der Seite des Filters, die der zu filternden Frischluft abgewandt ist, eine Matrix von Gasstrahldüsen. Es ist auch möglich, die Düsenmatrix in den Filter zu integrieren. Wenn durch diese Düsen ein Gas wie z.B. einfache gereinigte Luft mit geeignet hohem Druck geblasen wird, so durchströmt dieses Gas den Filter entgegengesetzt zur normalen betrieblichen Ansaug-Luftströmungsrichtung, d.h. von innen nach außen. Dadurch wird der außen am Luftfilter haftende Schmutz vom Gasstrom mitgerissen und nach auβen an die Umwelt abgegeben. Der Filter wird somit vom Schmutz befreit. Voraussetzung hierfür ist, dass der Druck des von innen nach außen strömenden reinigenden Gases groß genug ist, um dem Luftdruck der von außen einströmenden Frischluft entgegenzuwirken. Dies ist z.B. möglich, wenn bei der Reinigung ein Betriebszustand gewählt wird, bei dem ein aktives Einsaugen bzw. ein passives Einströmen von Frischluft reduziert bzw. vorzugsweise ganz unterbunden werden kann.
Es ist auch möglich, den Weg des Gasstroms so zu wählen, dass nur ein Teil genau entgegengesetzt zur normalen betrieblichen Ansaug-Luftströmungsrichtung geblasen wird, während die Hauptstromrichtung schräg an dem Filter entlang strömt. Der Anteil des senkrecht zum Filter strömenden Gasstroms transportiert die durch den gesamten Gasstrom gelockerten bzw. vom Filter gelösten Schmutzpartikel nach außen in die Umgebung.

Durch die Erfindung ist es möglich, die Reinigung automatisiert durchzuführen. Die automatisierte Reinigung kann in vorgebbarer Dauer und Häufigkeit immer dann ausgeführt werden, wenn ein geeigneter Betriebszustand vorliegt. Da die Strahldüsen bzw. Besen oder Schieber fest installiert sind, muss der Filter zur Reinigung nicht ausgebaut werden, weshalb die Reinigung auch außerhalb von Wartungseinrichtungen durchgeführt werden kann. Zur Reinigung ist kein zusätzliches Personal erforderlich.

Anspruch 2 beschreibt eine vorteilhafte Ausgestaltung des Anspruchs 1. Die Strahldüsen-Matrix besteht dabei aus mehreren ein- und/oder mehrreihigen Düsenstöcken, die über ein gemeinsames Verteilrohr an der speisenden Leitung angeschlossen sind. Die Düsenstöcke können dabei z.B. aus Rohren bestehen, in die Düsenöffnungen hineingearbeitet sind, aus denen das Reinigungsgas in einem bestimmten Anblaswinkel auf den Filter gestrahlt wird. Dabei können alle Düsen unter dem gleichen Winkel den Filter anblasen, oder die Düsen weisen gruppenweise oder einzeln eigene, von anderen Düsen verschiedene Anblaswinkel auf. Es ist möglich, auf einem Rohr jeweils nur eine Reihe an Düsen anzubringen oder mehrere Reihen. Die Düsenstöcke können alle oder gruppenweise über einen Verteiler an der gleichen Speiseleitung angebracht sein oder jede einzeln für sich gespeist werden. Die Düsenstöcke können horizontal, vertikal oder schräg angeordnet werden.

Gemäß Anspruch 3 wird als ein zur Reinigung verwendeter gasförmiger Stoff Luft verwendet, die aus einer Druckluftleitung des Fahrzeugs entnommen wird. Insbesondere bei Schienenfahrzeugen ist es vorteilhaft, aus der im Zug vorhandenen Hauptluftleitung indirekt oder aus der Hauptluftbehälterleitung Druckluft abzuzweigen und auf die erfindungsgemäße Reinigungsvorrichtung zu leiten. Dies kann beispielsweise mithilfe eines oder mehrerer Magnetventile erfolgen, die zwischen der Hauptluftleitung bzw. einer anderen im Fahrzeug vorhandenen Druckluftleitung und mindestens einer Speiseleitung für die erfindungsgemäße Vorrichtung angebracht werden und im Bedarfsfall die Druckluft auf die Speiseleitung freigeben. Denkbar ist aber auch, dass ein Kompressor, der durch die im Fahrzeug vorhandenen Energiequellen angetrieben wird, Druckluft für mindestens eine Speiseleitung der Reinigungsvorrichtung liefert oder die Druckluft aus einer sonstigen Quelle stammt.

Gemäß Anspruch 4 wird bei der Reinigung der verwendete gasförmige Stoff kontinuierlich oder pulsierend oder in einer beliebigen Kombination von Druckstößen unterschiedlicher Dauer und Stärke auf den Filter geblasen. So kann es beispielsweise bereits ausreichend sein, einen kontinuierlichen Luftstrom auf den Filter für eine gewisse Reinigungsdauer zu blasen, um eine ausreichende Reinigungswirkung zu erzielen. Bei anderen Verschmutzungsgraden ist es eventuell erforderlich mit kürzeren Druckluftstößen den Filter in Stoßschwingungen zu versetzen, um so den Schmutz zu lösen. Denkbar ist auch, verschiedene Anblasarten zu kombinieren, um beispielsweise festsitzenderen Schmutz zuerst mit Luftstößen zu lockern und dann mithilfe eines kontinuierlichen Luftstroms abzutragen oder dies gleichzeitig zu realisieren.
Analog ist es möglich, eine eventuell vorhandene Kehrvorrichtung definierte Stöße auf den Filter ausüben zu lassen, um den Schmutz locker zu klopfen, bevor oder während der eigentliche Abstreifvorgang abläuft.

Gemäß Anspruch 5 steuert eine elektronische Steuerung den Druck in der speisenden Leitung. Dies kann beispielsweise mithilfe eines steuerbaren Ventils erfolgen. Durch die elektronische Steuerung ist es möglich, das reinigende Gas in Abhängigkeit vom Verschmutzungsgrad optimal auf den Filter zu blasen. So ist es z.B. möglich, die Art und den Grad der Verschmutzung des Filters automatisch zu messen und ein daraufhin abgestimmtes optimales Reinigungsprogramm ablaufen zu lassen, bei dem Dauer, Stärke und bei Vorliegen von unterschiedlich gespeisten Düsenstöcken mit unterschiedlichen Ausblasrichtungen auch die Richtung des reinigenden Luftstroms variiert werden können.
Die automatische Messung von Art und Stärke der Verschmutzung kann z.B. optisch, akustisch, elektrisch, durch Messen des Frischluftdurchsatzes bei definierter Ansaugleistung, Messen der Kühlleistung in Bezug zur Temperatur der Außenluft, bei definierter Wärmeleistung des zu kühlenden Aggregats, etc. erfolgen.

Gemäß Anspruch 6 detektiert eine Steuerelektronik automatisch, ob sich das Fahrzeug in einem Zustand befindet, in dem eine Reinigung der Filteranlage möglich und erforderlich ist. Falls dies gegeben ist, startet und beendet die Steuerelektronik die Reinigung selbsttätig.

So ist für eine Reinigung z.B. erforderlich, dass die Ventilatoren, die die kühlende Frischluft auf einen Wärmetauscher aktiv ansaugen, ausgeschaltet werden können, was in einem Betriebszustand der Aggregate möglich ist, der keine hohe Kühlleistung erfordert. Bei Eisenbahnfahrzeugen könnte dies der Fall sein, wenn diese abgestellt oder gewendet werden. Durch das Abstellen der Ventilatoren werden die Schmutzpartikel nicht mehr an das Luftfilter festgesaugt, so dass sie leichter abfallen können.
Weiterhin muss entweder manuell oder automatisch verhindert werden, dass das Ausblasen der Filter im Bahnsteigbereich erfolgt, wo vorbeilaufende Fahrgäste getroffen werden könnten. Außerdem muss erfasst werden, wann zuletzt eine Reinigung der Filter erfolgte, damit eine weitere Reinigung nur in angemessenen, vorgegebenen Zeitintervallen erfolgt.

Um hartnäckiger festsitzenden Schmutz zu entfernen, kann gemäß Anspruch 7 zusätzlich auch eine automatische Kehrvorrichtung mindestens einen Schieber oder mindestens einen Besen über den Luftfilter bewegen. Hierfür ist eine Mechanik erforderlich, die den Schieber oder den Besen mit geeignetem Anpressdruck innen oder außen über den Filter führt, wobei der Schmutz abgestreift wird.

Die Erfindung wird im Folgenden anhand eines Ausführungsbeispiels und vier Figuren näher erläutert.

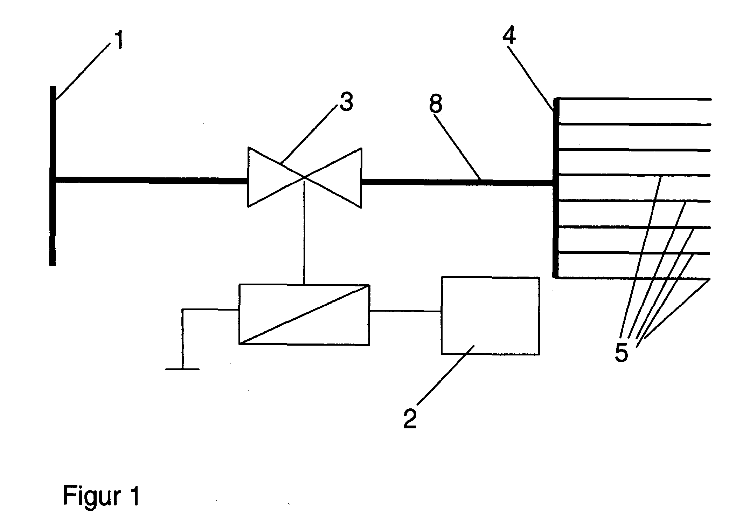

Fig. 1 zeigt das Schema einer Abblasvorrichtung für ein Schienenfahrzeug, das über eine Hauptluftleitung (HL) bzw. Hauptluftbehälterleitung (HBL) (1) verfügt. Eine elektronische Steuerung (2) regelt ein Magnetventil (3). Über dieses Magnetventil kann die Speiseleitung (8) der Abblasvorrichtung von der HL bzw. HBL (1) mit Druckluft beaufschlagt werden. An die Speiseleitung (8) ist ein Verteilrohr (4) angeschlossen, das die Druckluft an die einzelnen Düsenstöcke (5) der Abblasvorrichtung verteilt.

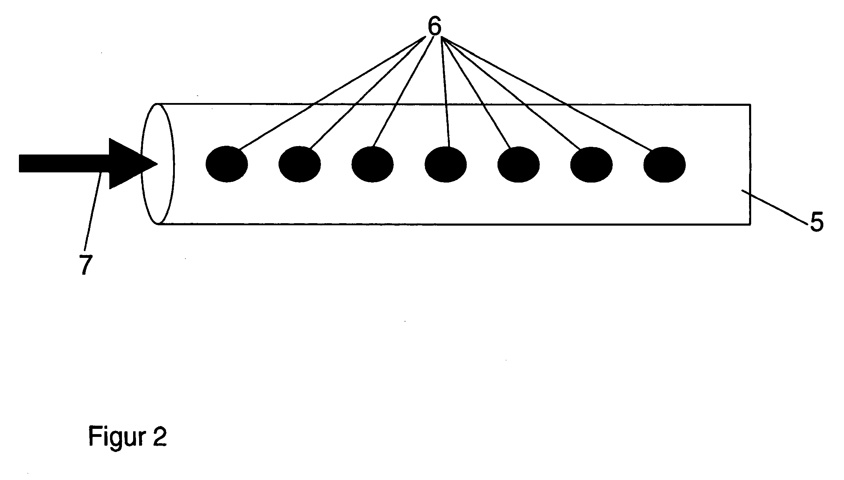

Fig. 2 zeigt das Schema eines einreihigen Düsenstockes (5) einer Abblasvorrichtung, bei dem alle Düsen bzw. Ausblasöffnungen (6) gleich ausgerichtet sind. Die Druckluft (7) wird durch den Düsenstock (5) geleitet und von den Düsen bzw. Ausblasöffnungen (6) ausgeblasen.

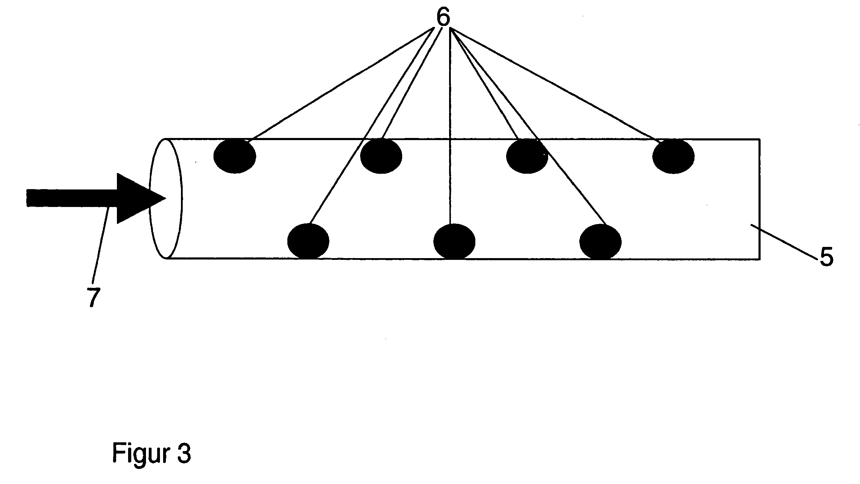

Fig. 3 zeigt das Schema eines zweireihigen Düsenstockes (5) einer Abblasvorrichtung, bei dem die Düsen bzw. Ausblasöffnungen (6) in zwei Reihen übereinander angelegt sind. Die Düsen bzw. Ausblasöffnungen (6) jeder Reihe sind dabei jeweils gleich ausgerichtet. Die Druckluft (7) wird durch den Düsenstock (5) geleitet und von den Düsen bzw. Ausblasöffnungen (6) ausgeblasen.

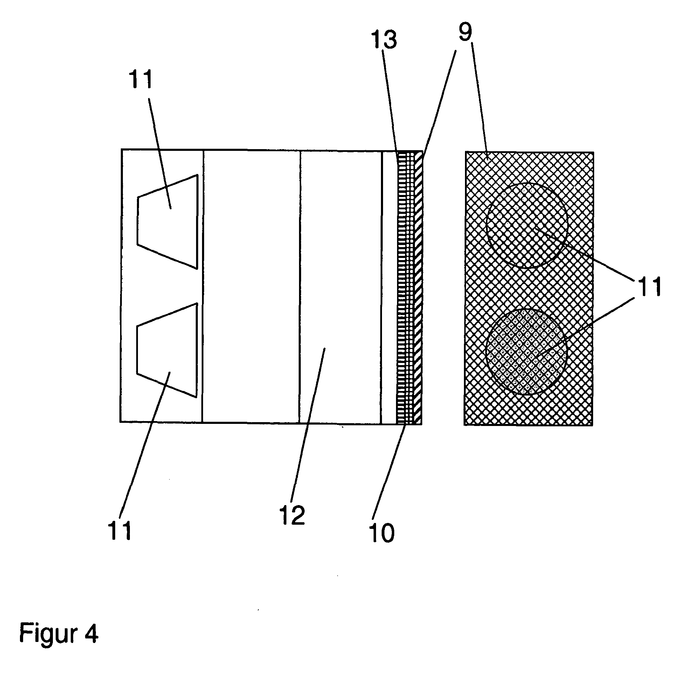

Fig. 4 zeigt schematisch eine Darstellung des Prinzips eines Luft-Kühlsystems eines Schienenfahrzeugs. Auf einer Trägerstruktur (9), die in der Figur in der Draufsicht rautenförmig dargestellt ist, aber auch wabenförmig oder anders strukturiert sein kann, an der Außenhülle des Fahrzeugs ist ein metallenes, feinmaschiges Filternetz (10) angebracht. Im Innern des Fahrzeugs sitzen zwei Ventilatoren (11), die Frischluft von außen nach innen ansaugen. Die Frischluft trifft auf den Wärmetauscher (12), der die Abwärme zur Kühlung an die zugeführte Luft abgibt. Hinter dem Luftfilter (10) und noch vor dem Wärmetauscher (12) ist eine erfindungsgemäße Abblasvorrichtung (13) angeordnet, mit der Luft entgegen der betrieblichen Ansaugluftströmung, d.h. von innen nach außen auf das Luftfiltergitter (10) geblasen werden kann. In der rechts in der Figur dargestellten Ansicht von außen auf das Luft-Kühlsystem sind aus Gründen der besseren Übersichtlichkeit nur die Trägerstruktur (9) und andeutungsweise zwei Ventilatoren (11) dargestellt.

In einem Ausführungsbeispiel wird das in Figur 4 dargestellte Luft-Kühlsystem eines Schienenfahrzeugs beschrieben. Auf einer Trägerstruktur (9), die in der Figur rautenförmig dargestellt ist, aber auch wabenförmig oder anders strukturiert sein kann, an der Außenhülle des Fahrzeugs ist ein metallenes, feinmaschiges Filternetz (10) angebracht. Im Innern des Fahrzeugs sitzt mindestens ein Ventilator (11), zum Ansaugen der Frischluft von außen nach innen. Die Frischluft trifft auf den Wärmetauscher (12), der die Wärme der Transformatoren an die zugeführte Luft zur Kühlung abgibt. Hinter dem Luftfilter (10) ist eine erfindungsgemäße Abblasvorrichtung (13) angeordnet, mit der Luft entgegen der betrieblichen Ansaugluftströmung, d.h. von innen nach außen auf das Luftfiltergitter (10) geblasen werden kann. Die Abblasvorrichtung (13) ist, wie in Figur 1 dargestellt, als Düsenmatrix aufgebaut. Die Düsenmatrix (13) besteht aus mehreren einzelnen Düsenstöcken (5), die über ein Verteilrohr (4) mit Druckluft beaufschlagt werden. Das Schienenfahrzeug verfügt über eine Hauptluftbehälterleitung (HBL) (1). Eine elektronische Steuerung (2) regelt ein Magnetventil (3). Über dieses Magnetventil kann die Speiseleitung (8) der Abblasvorrichtung von der HBL (1) mit Druckluft beaufschlagt werden. An die Speiseleitung (8) ist ein Verteilrohr (4) angeschlossen, das die Druckluft an die einzelnen Düsenstöcke (5) verteilt. Die Düsenstöcke sind dabei zweireihig aufgebaut, wie in Figur 3 dargestellt. Mithilfe der elektronischen Steuerung (2) wird z.B. halbtägig die Abblasvorrichtung zur Reinigung des Metallfiltergitters betätigt. Dies erfolgt vollautomatisch selbsttätig oder automatisch nach Freigabe der Vorrichtung durch den Triebfahrzeugführer, sobald die zu kühlenden Aggregate sich in einem Niedrigenergiezustand befinden und sich das Fahrzeug an einem Ort befindet, an dem eine Gefährdung für andere Personen ausgeschlossen ist. Die elektronische Steuerung schaltet dann die Ansaugventilatoren (11) für die kühlende Frischluft ab und öffnet das Magnetventil (3). Für eine bestimmte Zeit wird nun der Filter (10) von der Druckluft angeblasen. Die Verschmutzung am Filter (10) löst sich und wird vom Luftstrom in die Umwelt mitgerissen.
Anschließend wird der Filter (10) visuell oder automatisch auf den Verschmutzungsgrad hin überprüft und eventuell erneut gereinigt. Bei hartnäckigerer Verschmutzung steuert die elektronische Steuerung (2) das Magnetventil (3) manuell oder automatisch derart, dass intensive Druckluftstöße gepulst auf das Metallfiltergitter (10) geblasen werden.
Es ist auch möglich, die Vorrichtung rein manuell zu bedienen und somit die Dauer und Art der Druckluftbeaufschlagung beliebig auszuführen.

Die Erfindung beschränkt sich nicht nur auf die Verwendung in Fahrzeugen, sondern kann ebenso in stationären Filteranlagen verwendet werden. Weiterhin beschränkt sich der Einsatzbereich nicht auf Luftfilter, sondern es können allgemein Gasfilter gereinigt werden.

### Bezugszeichenliste

- 1.: Hauptluftleitung (HL) bzw. Hauptluftbehälterleitung (HBL)
- 2.: Elektronische Steuerung
- 3.: Magnetventil
- 4.: Verteilrohr
- 5.: Einzelner Düsenstock
- 6.: Düse / Ausblasöffnung
- 7.: Druckluft
- 8.: Speiseleitung
- 9.: Trägerstruktur
- 10.: feinmaschiges Metallfilter
- 11.: Ventilator
- 12.: Wärmetauscher
- 13.: Abblasvorrichtung (Düsenmatrix)

## Patentansprüche

1. Vorrichtung zur automatischen Reinigung mindestens eines Filters (10) einer Luftfilterungsanlage eines Fahrzeugs, **dadurch gekennzeichnet, dass** eine Matrix von Strahldüsen (13), die sich unmittelbar hinter dem oder im Filter (10) befindet, den Filter (10) entgegengesetzt zur normalen betrieblichen Ansaug-Luftströmungsrichtung mit einem gasförmigen Stoff eines definierten Drucks beaufschlagt, wobei die Strahldüsen durch die Matrixanordnung über die Filterfläche verteilt angeordnet sind.

2. Vorrichtung zur automatischen Reinigung mindestens eines Filters (10) gemäß Anspruch 1, wobei die Strahldüsen-Matrix (13) aus mehreren ein- und/oder mehrreihigen Düsenstöcken (5) besteht, die über ein gemeinsames Verteilrohr (4) an der speisenden Leitung (8) angeschlossen sind.

3. Vorrichtung zur automatischen Reinigung mindestens eines Filters (10) gemäß mindestens einem der zuvor genannten Patentansprüche, wobei der zur Reinigung verwendete gasförmige Stoff Luft ist, die aus einer Druckluftleitung (1) des Fahrzeugs entnommen wird.

4. Vorrichtung zur automatischen Reinigung mindestens eines Filters (10) gemäß mindestens einem der zuvor genannten Patentansprüche, wobei der zur Reinigung verwendete gasförmige Stoff kontinuierlich oder pulsierend oder in einer beliebigen Kombination von Druckstößen unterschiedlicher Dauer und Stärke auf den Filter trifft.

5. Vorrichtung zur automatischen Reinigung mindestens eines Filters (10) gemäß mindestens einem der zuvor genannten Patentansprüche, wobei eine elektronische Steuerung (2) den Druck in der speisenden Leitung (8) steuert.

6. Vorrichtung zur automatischen Reinigung mindestens eines Filters (10) gemäß mindestens einem der zuvor genannten Patentansprüche, wobei eine Steuerelektronik automatisch detektiert, ob sich das Fahrzeug in einem Zustand befindet, in dem eine Reinigung der Filteranlage möglich und erforderlich ist und, wenn dies gegeben ist, die Reinigung selbsttätig startet und beendet.

7. Vorrichtung zur automatischen Reinigung mindestens eines Filters (10) gemäß mindestens einem der zuvor genannten Patentansprüche, wobei zusätzlich ein mechanischer Schieber oder Abkehrbesen automatisch über den Luftfilter (10) streift.

## Claims

1. A device for automatically cleaning at least one filter (10) of an air filtration system of a vehicle, **characterized in that** a matrix of jet nozzles (13) situated directly behind or in the filter (10) acts upon the filter (10) opposite to the normal operational intake air flow direction with a gaseous substance of defined pressure, wherein the jet nozzles are distributed over the filter surface due to the matrix arrangement.

2. The device for automatically cleaning at least one filter (10) according to Claim 1, wherein the jet nozzle matrix (13) consists of several single-row and/or multi-row nozzle assemblies (5) that are connected to the feed line (8) via a common distribution pipe (4).

3. The device for automatically cleaning at least one filter (10) according to at least one of the preceding claims, wherein the gaseous substance used for the cleaning process consist of air that is withdrawn from a compressed air piping (1) of the vehicle.

4. The device for automatically cleaning at least one filter (10) according to at least one of the preceding claims, wherein the gaseous substance used for the cleaning process impinges upon the filter in a continuous or pulsating fashion or in any combination of pressure pulses of varying duration and intensity.

5. The device for automatically cleaning at least one filter (10) according to at least one of the preceding claims, wherein an electronic control (2) controls the pressure in the feed line (8).

6. The device for automatically cleaning at least one filter (10) according to at least one of the preceding claims, wherein control electronics automatically detect whether the vehicle is in a state, in which cleaning of the filtration system is feasible and necessary, and automatically start and stop the cleaning process if this is the case.

7. The device for automatically cleaning at least one filter (10) according to at least one of the preceding claims, wherein a mechanical slide or sweeping broom additionally brushes automatically over the air filter (10).

## Revendications

1. Dispositif de nettoyage automatique d'au moins un filtre (10) d'une installation de filtration d'air d'un véhicule, **caractérisé en ce qu'**une matrice de buses de projection (13) qui se trouve directement derrière ou dans le filtre (10) sollicite le filtre (10) dans le sens inverse du sens d'écoulement d'air d'aspiration normal avec une substance gazeuse à pression définie, les buses de projection étant disposées réparties sur la surface de filtration de par l'agencement de la matrice.

2. Dispositif de nettoyage automatique d'au moins un filtre (10) selon la revendication 1, dans lequel la matrice de buses de projection (13) est composée de plusieurs barres de buses sur une et/ou plusieurs rangées (5) qui sont raccordées par un tuyau répartiteur commun (4) à la conduite d'alimentation (8).

3. Dispositif de nettoyage automatique d'au moins un filtre (10) selon au moins une des revendications précédentes du brevet, dans lequel la substance gazeuse utilisée pour le nettoyage est de l'air qui provient d'une conduite d'air comprimé (1) du véhicule.

4. Dispositif de nettoyage automatique d'au moins un filtre (10) selon au moins une des revendications précédentes du brevet, dans lequel la substance gazeuse utilisée pour le nettoyage arrive en continu ou par impulsions ou en toute combinaison d'impulsions de pression de durée et de puissance différente jusqu'au filtre.

5. Dispositif de nettoyage automatique d'au moins un filtre (10) selon au moins une des revendications précédentes du brevet, dans lequel une commande électronique (2) commande la pression dans la conduite d'alimentation (8).

6. Dispositif de nettoyage automatique d'au moins un filtre (10) selon au moins une des revendications précédentes du brevet, dans lequel une électronique de commande détecte automatiquement si le véhicule se trouve dans un état dans lequel un nettoyage de l'installation de filtration est possible et nécessaire et, si c'est le cas, commence et termine automatiquement le nettoyage.

7. Dispositif de nettoyage automatique d'au moins un filtre (10) selon au moins une des revendications précédentes du brevet, dans lequel un curseur mécanique ou balai passe automatiquement sur le dessus du filtre à air (10).
